# EUROPEAN PATENT SPECIFICATION

(11) **EP 3 558 610 B1**
(45) Date of publication and mention of the grant of the patent: **07.07.2021**
(21) Application number: 17818159.0
(22) Date of filing: 21.12.2017
(51) Int. Cl.: B27N 3/16, B27N 3/20, B27N 5/00, B65D 19/00, B30B 11/02, B27N 3/22, B30B 15/30, B27N 1/02, B27N 3/18

(54) **APPARATUS FOR FORMING A MONOLITHIC COMPRESSED WOOD PALLET WITH INCREASED LOAD CAPACITY**
VORRICHTUNG ZUR HERSTELLUNG EINER MONOLITHISCHEN PRESSHOLZPALETTE MIT ERHÖHTER LADEKAPAZITÄT
APPAREIL DE FORMATION DE PALETTE EN BOIS COMPRIMÉ MONOLITHIQUE À CAPACITÉ DE CHARGE ACCRUE

(30) Priority: 22.12.2016 IT 201600129741
(43) Date of publication of application: 30.10.2019
(73) Proprietor: IMAL S.r.l, 41126 San Damaso (MO) (IT)
(72) Inventor: BENEDETTI, Paolo, 41126 Modena (IT)
(74) Representative: Modiano, Micaela Nadia
(86) International application number: PCT/EP2017/084080
(87) International publication number: WO 2018/115278

(56) References cited:
- EP-A1- 1 436 129
- EP-A1- 1 987 930
- EP-A1- 2 653 279
- US-A- 5 740 898
- US-A1- 2007 104 818
- US-A1- 2007 104 821

## Description

The present invention relates to an apparatus for forming a compressed wood pallet with increased load capacity.

Such an apparatus is known from EP 1 987 930 A1.

Pallets for loading and transporting goods are known which are generally constituted by a loading surface below which multiple resting elements protrude.

In particular, monolithic compressed wood pallets are known which are obtained by forming a mixture of loose wood material mixed with adhesive materials, which generally have a loading surface below which multiple hollow resting feet protrude. The shape of these pallets is defined by a continuous layer of material having a substantially constant thickness and density.

The forming of these pallets provides for the loading of a female mold part, which reproduces the lower surface of the pallet, with said mixture, a step of adhesion of the loaded mixture at the non-horizontal walls of the recesses of the female mold part that correspond to the resting feet, and a step of hot pressing with a male mold part which reproduces the upper surface of the pallet.

These pallets are practical in use due to their light weight and due to the possibility to be mutually stacked when empty by inserting the feet of the overlying pallet in the corresponding recesses of the underlying pallet.

However, these monolithic compressed wood pallets of the known type are not free from drawbacks, which include the fact that they have a limited load capacity, which limits their possibility of use with very heavy goods and/or of stacking for storage on the ground or for use in automatic storage systems.

In the ceramics sector, for example, the tile packs are generally stored by mutually stacking them, and therefore the weight of the stacked packs is discharged onto the pallets of the underlying levels. Monolithic compressed wood pallets of the known type cannot be used in this sector indeed due to their limited load capacity.

Another limitation of these monolithic compressed wood pallets of the known type is linked to the complex production cycle, which requires performing various operating steps to form the hollow feet by using dedicated apparatuses.

The aim of the present invention is to eliminate the drawbacks noted above of the background art by devising an apparatus for forming a monolithic compressed wood pallet with increased load capacity, which allows to obtain a system for loading the mixture of wood material in the pressing mold that is simple and automated for the provision of monolithic pallets with solid feet which have an increased load capacity, so as to expand their possibilities of use for very heavy goods or in sectors in which the storage of mutually stacked packs is used or in automatic storage systems.

Within this aim, an object of the present invention is to allow the loading of a mixture of wood material into the mold so as to obtain, by pressing, pallets with regions having different density.

A further object of the present invention is to simplify the production cycle and to not require complex apparatuses for its execution.

This aim and these and other objects which will become better apparent hereinafter are all achieved by the present apparatus for forming a monolithic compressed wood pallet with increased load capacity, of the type that comprises a loading surface and at least two underlying resting stringers formed integrally in a monolithic body and is obtained by forming a mixture based on loose wood material and adhesive materials, comprising:
- storage means comprising a chamber for the collection of said mixture inside which a first conveyor belt is accommodated for feeding a substantially uniform layer of said mixture toward an outlet, the first belt being wound around at least one first motorized roller and entrained by it with a feed speed;
- pressing means, which are provided with a lower mold part and with an upper mold part between which a receptacle for forming a pallet is provided and which are alternately movable between a spaced loading configuration and a closer pressing configuration,
   - a second conveyor belt interposed between said storage means and said pressing means, which is wound around at least one second motorized roller which drives it with an advancement speed and is associated with means for actuation with an alternating translational in a substantially horizontal direction with a translation speed, the upper portion of the second belt being substantially horizontal and translating with a transfer speed obtained from the combination of the advancement speed and of the translation speed, during loading the second belt being arranged below the outlet so as to obtain the deposition on the upper portion of a mat of said mixture and during unloading the second belt being interposed between said mold parts in a spaced configuration for the transfer of the mat within the lower mold part,
   - means for modulating at least one among said feed speed, said advancement speed and said translation speed so as to obtain an adjustment of the quantity of mixture loaded/unloaded on/from the upper portion of said second belt along the extension of said mat.

Further characteristics and advantages of the present invention will become better apparent from the detailed description of two preferred but not exclusive embodiments of an apparatus for forming a monolithic compressed wood pallet with increased load capacity and of a pallet which can be thus obtained, illustrated by way of nonlimiting example in the accompanying drawings, wherein:

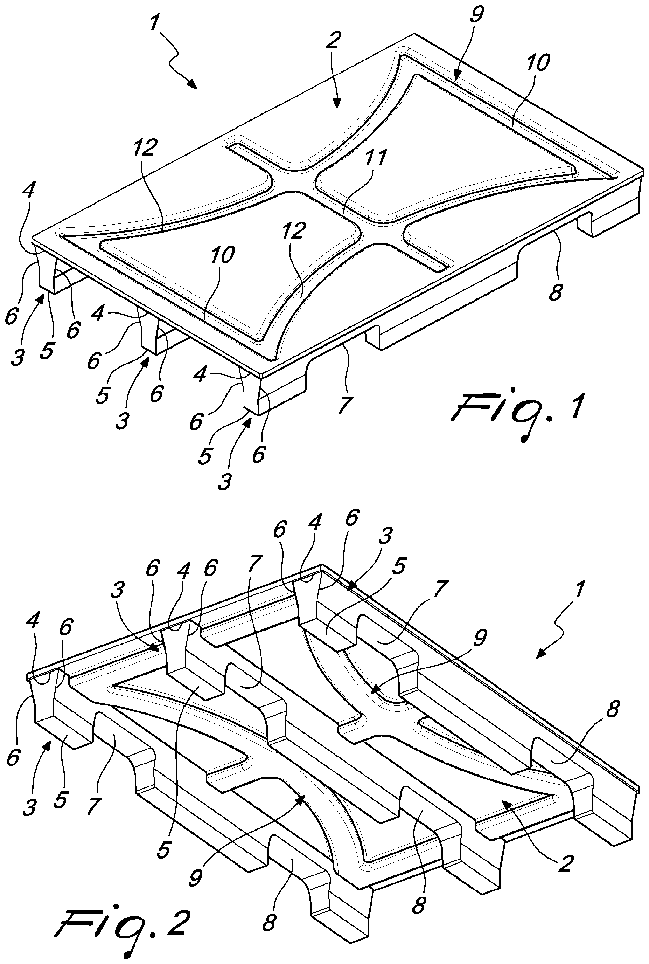

Figures 1 and 2 are respective axonometric views from above and from below of a monolithic compressed wood pallet with increased load capacity;

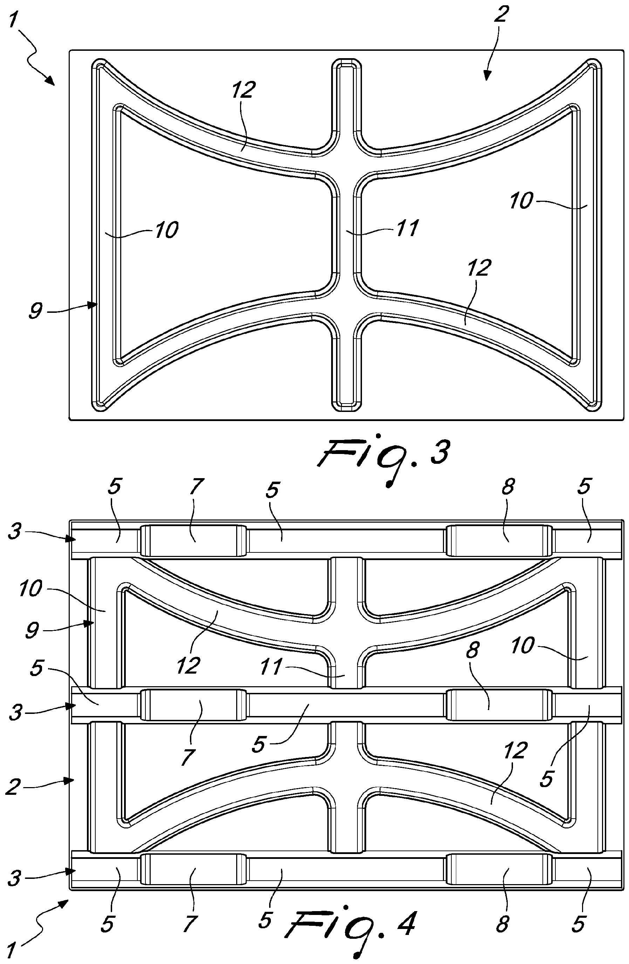

Figures 3 and 4 are respective top and bottom plan views of the pallet;

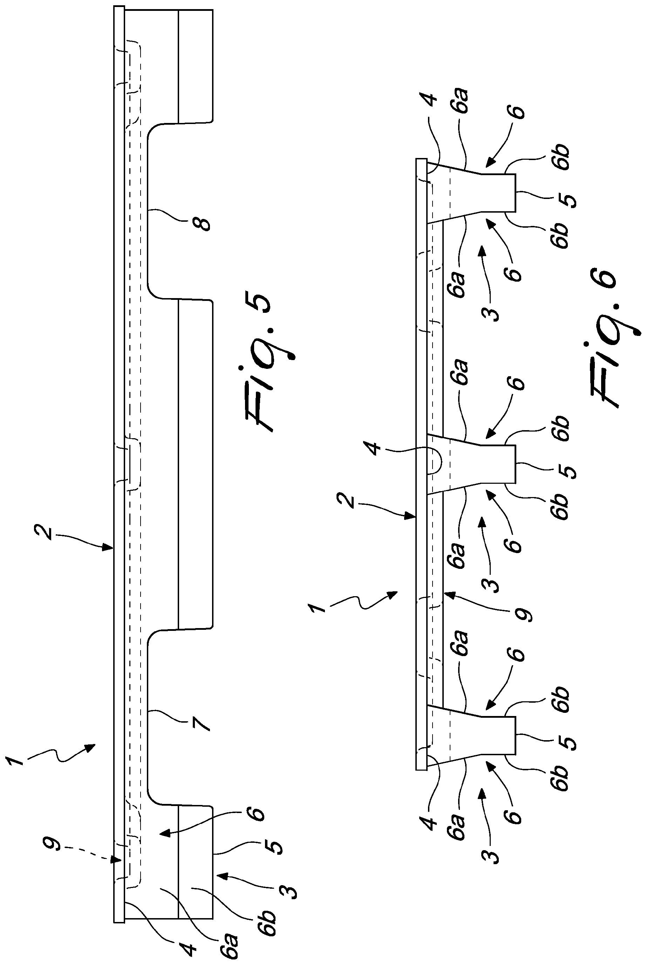

Figure 5 is a front elevation view at a longer side of the pallet;
Figure 6 is a front elevation view taken at a shorter side of the pallet;
Figure 7 is a partially sectional view of a plurality pallets, stacked on each other;
Figures 8, 9 and 10 are partially sectional views of a first embodiment of a forming apparatus according to the invention, respectively during loading and in two subsequent unloading operating steps;
Figures 11, 12 and 13 are partially sectional views of a second embodiment of a forming apparatus according to the invention, respectively during loading and in two subsequent unloading operating steps.

With particular reference to these figures, the numeral 1 designates generally a monolithic compressed wood pallet with increased load capacity.

The pallet 1 is of the type that comprises a loading surface 2 and at least two underlying resting elements 3 which are mutually formed integrally in a monolithic body and is obtained by forming a mixture I based on loose wood material and adhesive materials.

The production of the pallet 1 occurs by hot pressing of the mixture I loaded into an adapted mold and the adhesive materials are of the thermosetting type. The loose wood material is typically of the type of wood chips or shavings.

Each one of the resting elements 3 is constituted by a respective stringer that has a linear extension. The term "stringer" is understood to designate a continuous element that has a longitudinal extension that is substantially greater than the dimensions of the corresponding transverse cross-section and is made of solid material.

Furthermore, the pallet 1 is provided with regions having different densities of material, i.e., it has a nonuniform density in its three-dimensional extension.

In one preferred example, the pallet 1 can have a higher density of material at the stringers 3 with respect to the loading surface 2. For example, the density of the stringers 3 can be up to twice the density of the loading surface 2.

In this manner it is possible to increase the load capacity of the pallet 1, allowing its use also to provide packs of heavy materials or mutual stacking once loaded.

However, alternative examples are not excluded in which the pallet 1 has, for example, a different distribution of the density of the material that constitutes it over the extension of the loading surface 2, i.e., has a density of the stringers 3 that is up to half that of the loading surface 2.

The transverse cross-section of each stringer 3 is provided with a side 4 for coupling to the loading surface 2 and with a resting base 5, which are mutually opposite. Preferably, the coupling side 4 has a linear extension that is greater than the resting surface 5 so as to render the pallet 1 stronger, avoiding the separation of the stringers 3 from the loading surface 2 in case of lateral impact, and at the same time so as to limit the quantity of material used, with a consequent reduction of the weight of said pallet and of the corresponding production cost.

In this case, the transverse cross-section of each stringer 3 is provided with a pair of mutually opposite side walls 6, which connect the coupling side 4 and the resting base 5 and have a first portion 6a, adjacent to the coupling side 4, and a second portion 6b, which is adjacent to the resting base 5. Preferably, the first portions 6a converge in the direction away from the coupling side 4 and the second portions 6b are mutually substantially parallel. This shape of the transverse cross-section of the stringers 3 allows easy stacking of the unloaded pallets 1, so to contain their space occupation for transport and storage.

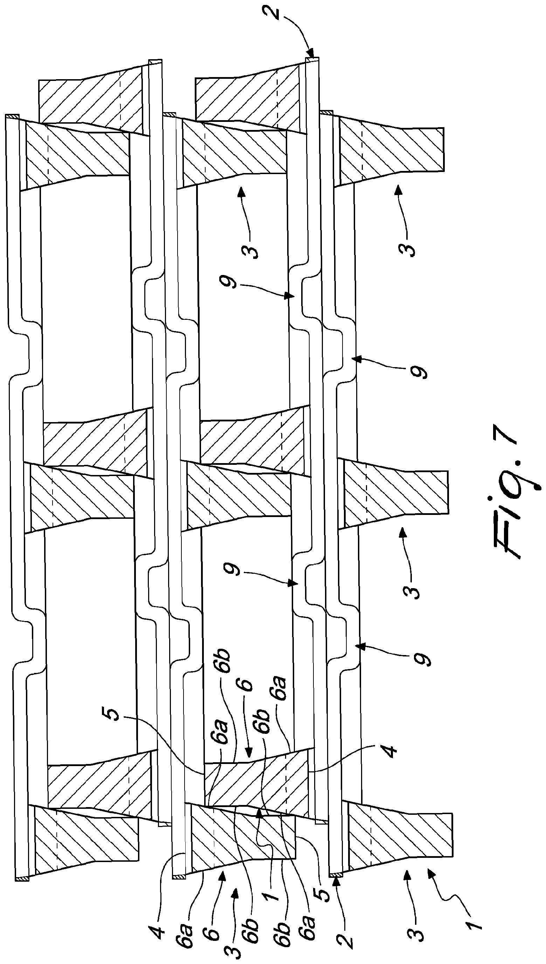

With reference to Figure 7, it is in fact possible to note that the pallets 1 can be stacked arranged in pairs, the upper one turned over with the corresponding loading surface 2 resting on the loading surface 2 of the lower one and slightly staggered in a horizontal direction. The stringers 3 that are directed upward of the upper pallet 1 of each pair are juxtaposed with the stringers 3 of the lower pallet 1 of the overlying pair, with the corresponding side walls 6 in contact (the first portion 6a of a side wall 6 of each stringer 3 of the upper pallet 1 of the underlying pair in contact with the edge between the resting base 5 and the second portion 6b of a side wall 6 of each stringer 3 of the lower pallet 1 of the overlying pair and vice versa).

However, it is not excluded that the coupling side 4 and the resting base 5 may have substantially the same linear extension and the side walls 6 therefore can have a rectilinear extension so as to form a substantially rectangular transverse cross-section of each stringer 3.

Generally, the loading surface 2 has the shape of a parallelogram in plan view, i.e., the shape of a quadrilateral with two pairs of identical and parallel sides. The figures show a pallet 1 which has a loading surface 2 having a rectangular shape in plan view, but it is not excluded that it might have for example a square shape in plan view.

The stringers 3 are therefore extended parallel to a first pair of parallel sides of the loading surface 2 and preferably have a longitudinal extension that is substantially equal to said sides.

Furthermore, the pallet 1 can have three stringers 3, of which two are arranged proximate to the first pair of parallel sides and one is arranged at the centerline of the loading surface 2, in order to better support the overlying weight and avoid deformations of said surface.

The number of stringers 3 can vary as a function of the extension of the loading surface 2 and of the load that the pallet 1 must bear.

Usefully, each stringer 3 has, along its own longitudinal extension, a first recess 7 and a second recess 8 which are open downward, the first and second recesses 7 and 8 of the stringers 3 being mutually aligned so as to form respective channels for the insertion of loading forks for the handling of the pallet 1 by means of conventional conveyance apparatuses provided with lifting forks.

Depending on the intended use of the pallet 1, the size and height of the stringers 3 and/or the size and arrangement of the recesses 7 and 8 may vary. It is not excluded that said recesses might not be present and that the stringers 3 might have a uniform height along their linear extension; in this case, the lifting forks of conventional conveyance apparatuses can be inserted parallel to the stringers 3 in the spaces provided between them.

Finally, the pallet 1 is provided with stiffening ribs 9 which are formed integrally with the loading surface 2.

More precisely, the ribs 9 are formed by slots which are recessed in the upper face of the loading surface 2 and protrude from the lower face of said surface, the loading surface 2 having a substantially constant thickness over its extension.

In a lower region, the ribs 9 determine the resting surface for the stacking of the pallets 1, since the ribs 9 of the lower pallet 1 of the overlying pair rest on the resting bases 5 of the stringers 3 that are directed upward of the upper pallet 1 of the underlying pair and vice versa (Figure 7).

In the example shown, the ribs 9 have two first rectilinear portions 10 proximate to the second pair of parallel sides of the loading surface 2, a second rectilinear portion 11, which is parallel to the preceding ones and is arranged at the centerline of said surface, and two third arc-like portions 12, with the concavities directed toward the outside of the loading surface 2, which connect the ends of the first portions 10 and intersect the second portion 11.

However, alternative geometries and/or distributions of the ribs 9 are not excluded which are in any case suitable to increase the rigidity of the loading surface 2.

In order to form the pallet 1 described above, an apparatus 100 is advantageously used which comprises:
- storage means 101, which comprise a chamber 102 for collecting the mixture I, inside which a first conveyor belt 103 is accommodated for feeding a substantially uniform layer S of mixture I toward an outlet 104, the first belt 103 being wound around at least one first motorized roller 105 and being moved by it with a feed speed (indicated by the arrow V₁ in the figures);
- pressing means 106 provided with a lower mold part 107 and with an upper mold part 108, between which a receptacle for forming a pallet 1 is formed, which can move alternately between a spaced loading configuration and a mutually closer pressing configuration,
- a second conveyor belt 109, which is interposed between the storage means 101 and the pressing means 106, which is wound around at least one second motorized roller 110 which entrains it with an advancement speed (indicated by the arrow V₂ in the figures) and is associated with means for alternating translational actuation in a substantially horizontal direction with a translation speed (indicated by the arrow V₃ in the figures).

The upper portion 111 of the second belt 109 is arranged substantially horizontally and translates with a transfer speed (indicated by the arrow V₄ in the figures) that is obtained from the combination of the advancement speed V₂ and of the translation speed V₃.

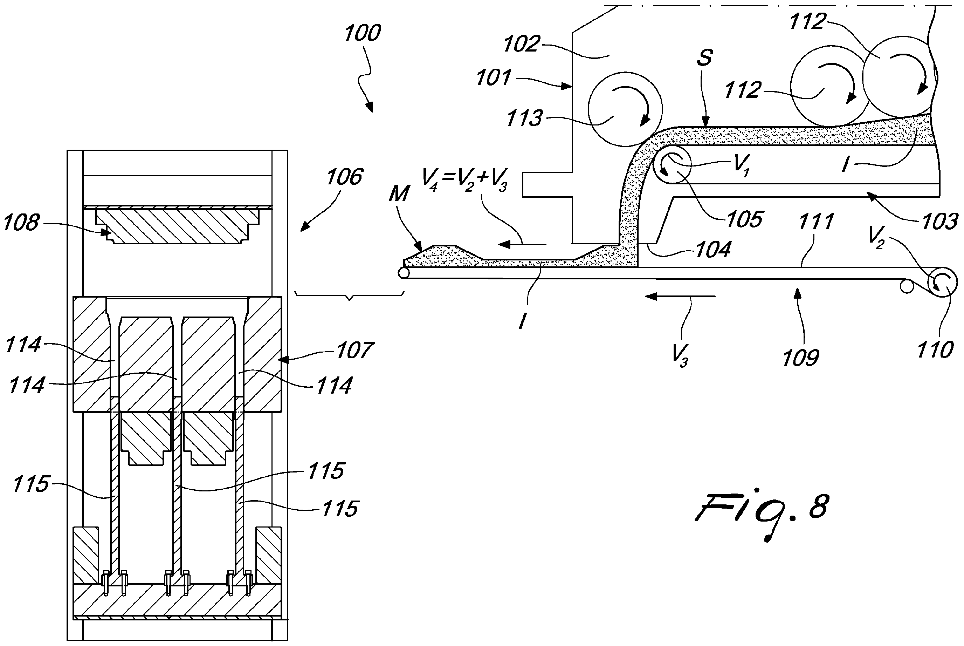

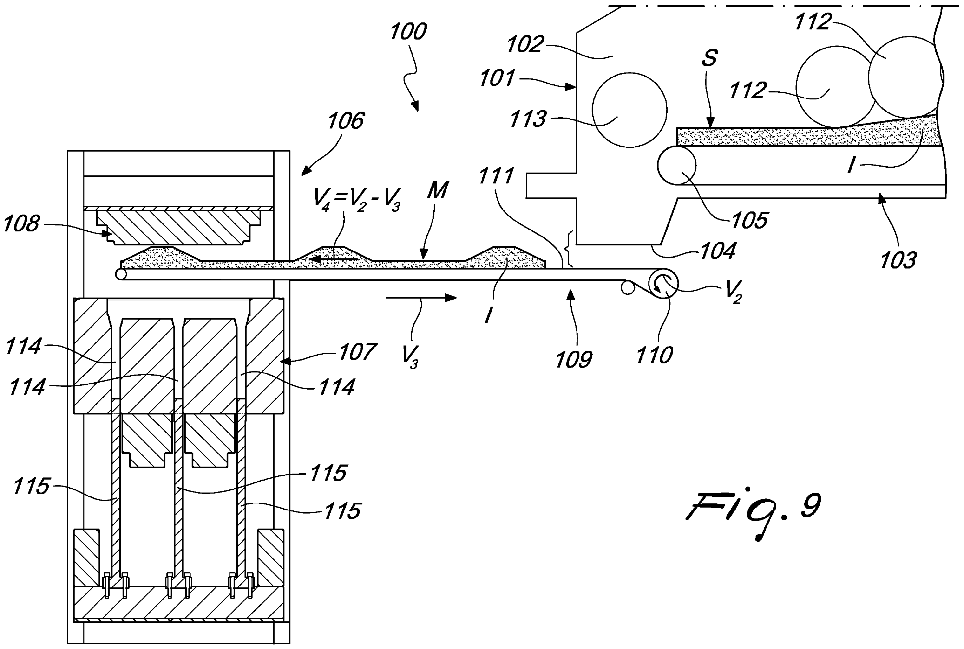

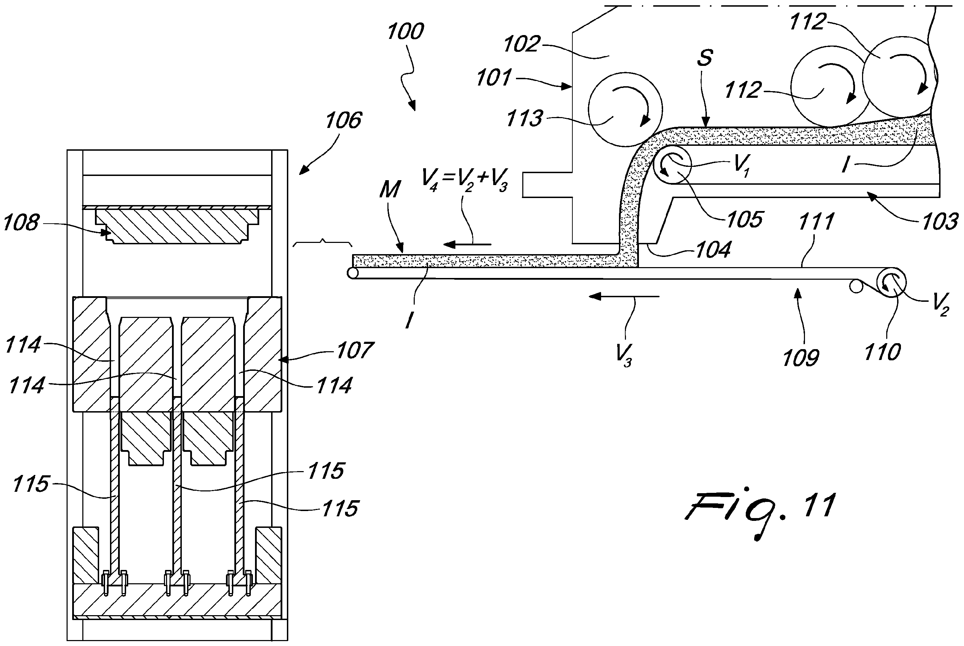

In the loading step (Figures 8 and 11), the second belt 109 is arranged below the outlet 104 so as to obtain the deposition on the upper portion 111 of a mat M of mixture I and during the unloading step (Figures 9-10, 12-13) the second belt 109 is interposed between the mold parts 107 and 108 in a spaced configuration for the transfer of the mat M into the lower mold part 107.

The apparatus further 100 comprises means for modulation of at least one among the feed speed V₁, the advancement speed V₂ and the translation speed V₃ so as to obtain an adjustment of the quantity of mixture I loaded/unloaded on/from the upper portion 111 of the second belt 109 along the extension of the mat M in a direction that is parallel to the arrangement of said second belt.

The storage means 101 are of the type of a conventional bunker, inside which a mass of mixture I is discharged which a plurality of rollers 112 levels into the shape of a layer S on the first belt 103 and an end roller 113 conveys toward the outlet 104.

The pressing means 106 consist of a conventional press. According to a known technology, the lower mold part 107 is provided with deeper regions, into which a larger quantity of mixture I is therefore unloaded, at the portions of the pallet 1 in which a higher density is to be obtained.

The pressing means 106 preferably have a simultaneous actuation for mutual approach/spacing of the lower mold parts 107 and 108. The pressure to be applied is determined as a function of the thickness of the mixture I that is loaded into the lower mold part 107 and of the thickness and final density of the article that one wishes to obtain. In the illustrated embodiments, for example, the lower mold part 107 is provided with three recesses 114 which correspond to the three stringers 3 of the pallet 1 to be formed, along which, during pressing, corresponding punches 115 supported by a cross-member slide.

The means for translational actuation of the second belt 109, not shown, can be constituted by conventional linear actuators.

Preferably, the modulation means are adapted to manage all three of the feed speed V₁, the advancement speed V₂ and the translation speed V₃.

Advantageously, the first roller 105, the second roller 110 and the translation means comprise respective electric motors, not shown, and the modulation means, also not shown, comprise electronic means for the adjustment and control of said electric motors, of the type of conventional inverters, which are associated with an electronic processing unit, such as a programmed or programmable electronic board with a working cycle that is defined on the basis of the geometry of the pallet 1 to be provided.

In a first embodiment (Figures 8-10), the modulation means are adapted to reduce the transfer speed V₄ and/or increase the feed speed V₁ during loading of the second belt 109 (Figure 8) so as to obtain a "preformed" mat M, i.e., having sections of greater thickness that correspond to the portions of the pallet 1 with higher density, and to maintain the transfer speed V₄ substantially constant during the unloading of said second belt (Figures 9-10), with the first belt 103 stationary.

The figures, for example, show a mat M which has three sections of greater thickness which correspond to the three stringers of the pallet 1 to be obtained, which are designed to be unloaded into the three recesses 114 of the lower mold part 107.

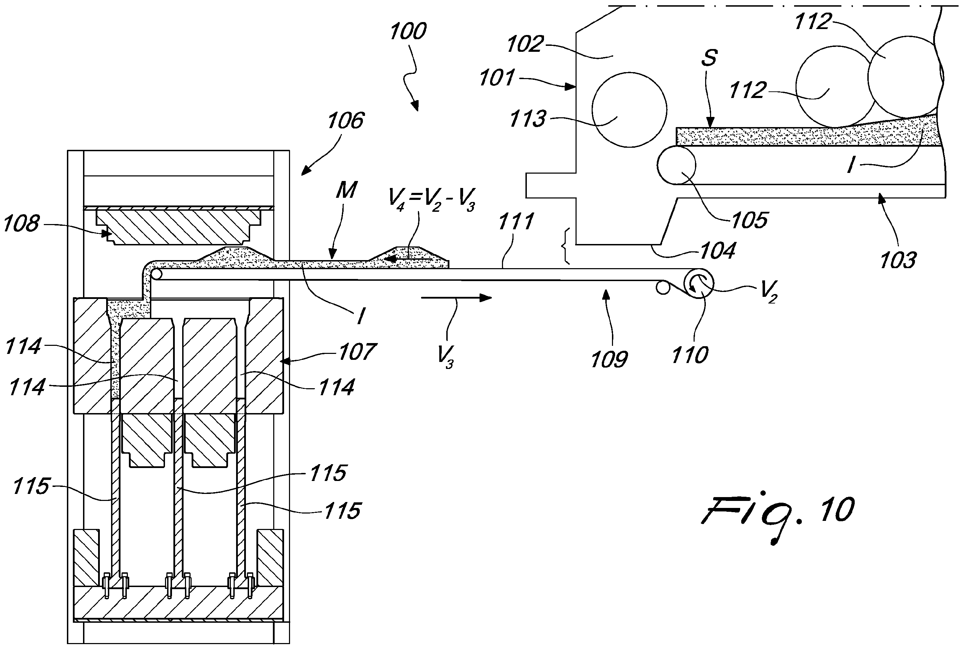

Figure 9 shows the second belt 109 fully inserted between the mold parts 107 and 108 at the beginning of the unloading step; Figure 10 shows a subsequent operating step of unloading with the second belt 109 that moves away from the mold parts 107 and 108 while it unloads the mat M into the lower mold part 107.

The adjustment of the transfer speed V₄ can be performed by acting on one or both of the advancement speed V₂ and the translation speed V₃.

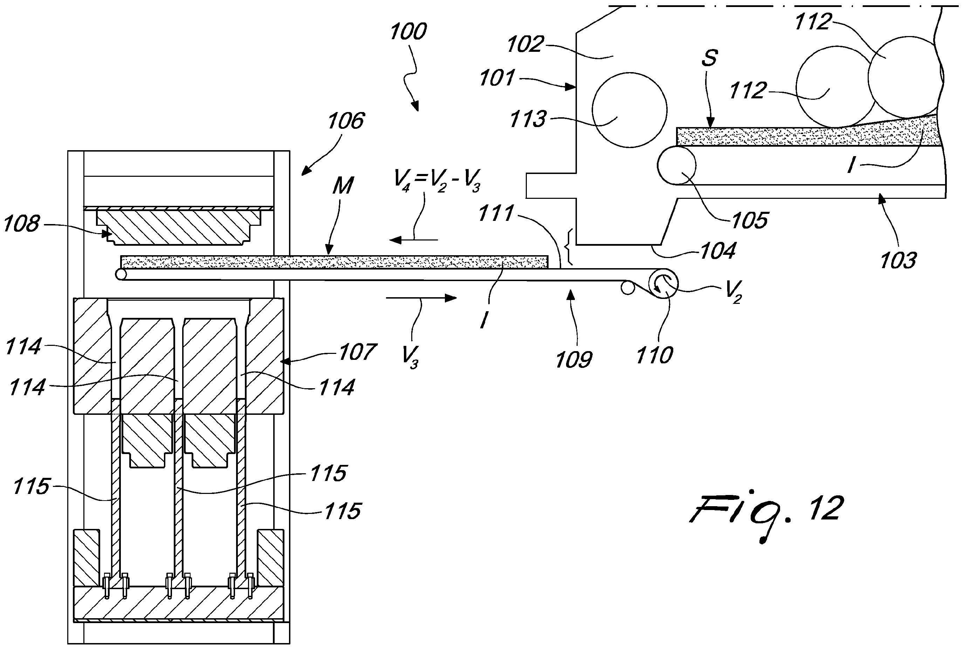

In an alternative embodiment of the apparatus 100 (Figures 11-13), the modulation means are adapted to keep substantially constant the feed speed V₁ and the transfer speed V₄ during loading (Figure 10) of the second belt 109 so as to obtain a mat M that has a substantially constant thickness and to increase the advancement speed V₂ and/or reduce the translation speed V₃ during the unloading of said second belt (Figures 12-13), with the first belt stationary, in order to obtain the unloading of larger quantities of mixture I at the sections of the lower mold part 107 that correspond to the portions of pallet 1 that have a higher density.

With reference to the figures, for example, the modulation means can increase the advancement speed V₂ and/or decrease the translation speed V₃ at the recesses 114 of the lower mold part 107 in order to obtain their filling.

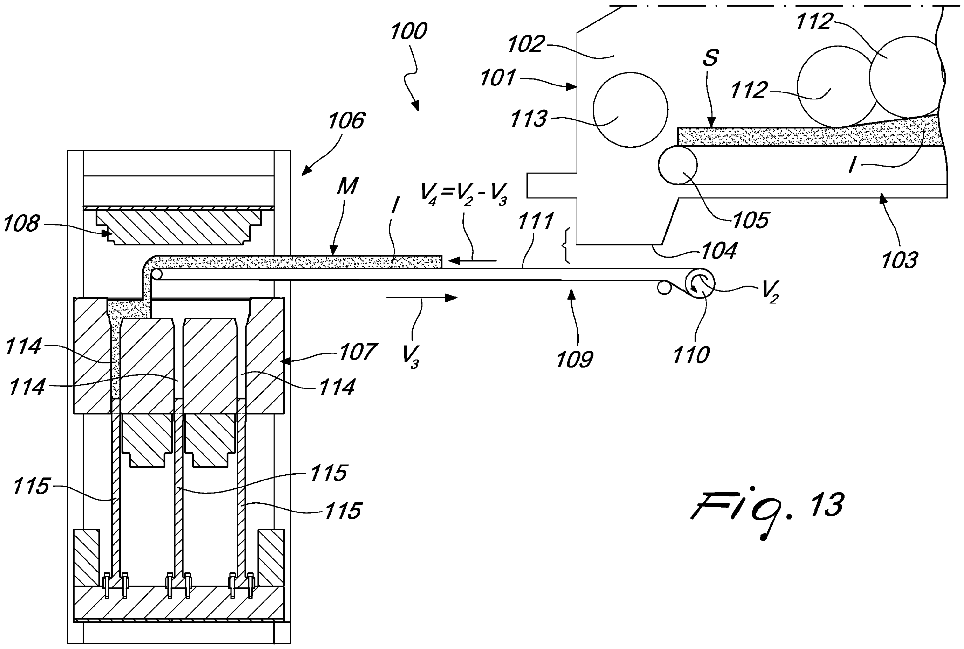

Figure 12 shows the second belt 109 fully inserted between the mold parts 107 and 108 at the beginning of the unloading step; Figure 13 shows a subsequent operating step of unloading, with the second belt 109 moving away from the mold parts 107 and 108 while it unloads the mat M into the lower mold part 107.

In practice it has been found that the described invention achieves the proposed aim and objects and in particular the fact is stressed that the forming apparatus according to the invention allows to obtain, by means of a simple and automated process, the loading of molds to obtain monolithic compressed wood pallets with solid supporting elements.

Furthermore, the pallet allows to maintain the light weight characteristics that are typical of compressed wood pallet with hollow feet, increasing however the load capacity in order to obtain a performance that is equivalent to that of pallets made of wood boards.

Furthermore, the stringer-like shape of the resting elements allows to handle the pallets on roller conveyors or to use them in automatic storage systems.

Moreover, the forming apparatus according to the invention is constructively simple and the pressing cycle can occur in a single step according to known technologies.

The invention thus conceived is susceptible of numerous modifications and variations, all of which are within the scope of the appended claims.

All the details may furthermore be replaced with other technically equivalent elements.

In practice, the materials used, as well as the contingent shapes and dimensions, may be any according to the requirements without thereby abandoning the protective scope of the claims that follow.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (100) for forming monolithic compressed wood pallets (1) with increased load capacity, of the type that comprises a loading surface (2) and at least two underlying resting stringers (3) formed integrally in a monolithic body that is obtained by forming a mixture (I) based on loose wood material and adhesive materials, comprising:
- storage means (101) comprising a chamber (102) for the collection of said mixture (I) inside which a first conveyor belt (103) is accommodated for feeding a substantially uniform layer (S) of said mixture (I) toward an outlet (104), the first belt (103) being wound around at least one first motorized roller (105) and configured to be entrained by said roller with a feed speed (V₁);
- pressing means (106), which are provided with a lower mold part (107) and with an upper mold part (108) between which a receptacle for forming a pallet (1) is provided and which are alternately movable between a spaced loading configuration and a closer pressing configuration,
- a second conveyor belt (109) interposed between said storage means (101) and said pressing means (106), which is wound around at least one second motorized roller (110) configured to drive it with an advancement speed (V₂) and is associated with translation means for actuation with an alternating translational motion in a substantially horizontal direction with a translation speed (V₃), the upper portion (111) of the second belt (109) being substantially horizontal and configured for translating with a transfer speed (V₄) obtained from the combination of the advancement speed (V₂) and of the translation speed (V₃),
during loading the second belt (109) being arranged below the outlet (104) so as to obtain the deposition on the upper portion (111) of a mat (M) of said mixture (I) and during unloading the second belt (109) being interposed between said mold parts (107, 108) in a spaced configuration for the transfer of the mat (M) within the lower mold part (107),
means for modulating at least one among said feed speed (V₁), said advancement speed (V₂) and said translation speed (V₃) so as to obtain an adjustment of the quantity of mixture (I) loaded/unloaded on/from the upper portion (111) of said second belt (109) along the extension of said mat (M).

2. The apparatus (100) according to claim 1, **characterized in that** said translation means, said first motorized roller (105) and said second motorized roller (110) comprise respective electric motors and **in that** said modulation means comprise electronic means for adjustment and control of said electric motors.

3. The apparatus (100) according to claim 1 or 2, **characterized in that** said modulation means are adapted to reduce said transfer speed (V₄) and/or increase said feed speed (V₁) during loading so as to obtain a mat (M) of said mixture (I) having thicker cross-sections that correspond to the portions of the pallet (1) that have a higher density and so as to maintain said transfer speed (V₄) substantially constant during the unloading of said belt.

4. The apparatus (100) according to claim 1 or 2, **characterized in that** said modulation means are adapted to maintain said feed speed (V₁) and said transfer speed (V₄) substantially constant during the loading of said second belt (109), so as to obtain a mat (M) of said mixture (I) that has a substantially constant thickness and so as to increase said advancement speed (V₂) and/or decrease said translation speed (V₃) during the unloading of said second belt for the discharge of greater quantities of mixture (I) at the sections (114) of said lower mold part (107) that correspond to the portions of the pallet (1) that have a higher density.

## Patentansprüche

1. Eine Vorrichtung (100) zur Herstellung monolithischer Pressholzpaletten (1) mit erhöhter Ladekapazität von der Art, die eine Ladefläche (2) und mindestens zwei darunterliegende Träger (3) umfasst, integral in einem monolithischen Körper geformt, der gewonnen wird durch Formen einer Mischung (I), basierend auf losem Holzmaterial und Klebematerialien; Folgendes umfassend:
- Lagerungsmittel (101), die eine Kammer (102) zum Lagern der Mischung (I) umfassen, in der sich ein erstes Förderband (103) zum Befördern einer im Wesentlichen einheitlichen Schicht (S) der Mischung (I) zu einem Auslass (104) befindet, wobei das erste Band (103) um mindestens eine erste motorisierte Rolle (105) gewunden und ausgebildet ist, um von der Rolle mit einer Fördergeschwindigkeit (V₁) mitgezogen zu werden;
- Pressmittel (106), die mit einem unteren Formteil (107) und einem oberen Formteil (108) ausgestattet sind, zwischen denen ein Behälter zum Formen einer Palette (1) bereitgestellt ist und die abwechselnd zwischen einer beabstandeten Ladekonfiguration und einer näheren Presskonfiguration beweglich sind;
- ein zweites Förderband (109), angeordnet zwischen den Lagerungsmitteln (101) und den Pressmitteln (106), das um mindestens eine zweite motorisierte Rolle (110) gewunden ist, die ausgebildet ist, um es mit einer Vorschubgeschwindigkeit (V₂) anzutreiben, und mit Translationsmitteln für den Antrieb mit einer alternierenden Translationsbewegung in einer im Wesentlichen horizontalen Richtung mit einer Translationsgeschwindigkeit (V₃) verbunden ist; wobei der obere Abschnitt (111) des zweiten Bandes (109) im Wesentlichen horizontal und für die Translation mit einer Transfergeschwindigkeit (V₄) ausgebildet ist, die aus der Kombination der Vorschubgeschwindigkeit (V₂) und der Translationsgeschwindigkeit (V₃) gewonnen wird;
wobei während des Ladens das zweite Band (109) unterhalb des Auslasses (104) angeordnet ist, um eine Matte (M) der Mischung (I) auf den oberen Abschnitt (111) zu deponieren; und wobei während des Abladens das zweite Band (109) sich in einer beabstandeten Konfiguration zwischen den Formteilen (107, 108) befindet, zum Zwecke des Transfers der Matte (M) im unteren Formteil (107);
Mittel zum Modulieren mindestens einer aus der Fördergeschwindigkeit (V₁), der Vorschubgeschwindigkeit (V₂) und der Translationsgeschwindigkeit (V₃), um die Menge der Mischung (I) anzupassen, die auf/von den/dem oberen Abschnitt (111) des zweiten Bandes (109) entlang der Erstreckung der Matte (M) geladen/abgeladen wird.

2. Die Vorrichtung (100) gemäß Anspruch 1, **dadurch gekennzeichnet, dass** die Translationsmittel, die erste motorisierte Rolle (105) und die zweite motorisierte Rolle (110) jeweilige Elektromotoren umfassen, und dadurch, dass die Modulationsmittel elektronische Mittel zur Anpassung und Steuerung der Elektromotoren umfassen.

3. Die Vorrichtung (100) gemäß Anspruch 1 oder 2, **dadurch gekennzeichnet, dass** die Modulationsmittel ausgebildet sind, um die Transfergeschwindigkeit (V₄) während des Ladens zu verringern und/oder die Fördergeschwindigkeit (V₁) zu erhöhen, um eine Matte (M) der Mischung (I) zu erhalten, die dickere Querschnitte hat, welche den Abschnitten der Palette (1) mit höherer Dichte entsprechen, und um die Transfergeschwindigkeit (V₄) während des Abladens des Bandes im Wesentlichen konstant zu halten.

4. Die Vorrichtung (100) gemäß Anspruch 1 oder 2, **dadurch gekennzeichnet, dass** die Modulationsmittel ausgebildet sind, um die Fördergeschwindigkeit (V₁) und die Transfergeschwindigkeit (V₄) während des Ladens des zweiten Bandes (109) im Wesentlichen konstant zu halten, um eine Matte (M) der Mischung (I) zu erhalten, die eine im Wesentlichen konstante Dicke hat, und um die Vorschubgeschwindigkeit (V₂) zu erhöhen und/oder die Translationsgeschwindigkeit (V₃) während des Abladens des zweiten Bandes zu verringern, zum Zwecke des Abladens größerer Mengen der Mischung (I) an den Abschnitten (114) des unteren Formteils (107), die den Abschnitten der Palette (1) mit höherer Dichte entsprechen.

## Revendications

1. Appareil (100) pour former des palettes en bois comprimé monolithiques (1) à capacité de charge augmentée, du type qui comprend une surface de chargement (2) et au moins deux longerons d'appui sous-jacents (3) formés d'un seul tenant en un corps monolithique qui est obtenu en formant un mélange (I) à base de produit ligneux en vrac et de matériaux adhésifs, comprenant :
- un moyen de stockage (101) comprenant une chambre (102) destinée à recueillir ledit mélange (I) à l'intérieur de laquelle est logée une première courroie transporteuse (103) pour amener une couche substantiellement uniforme (S) dudit mélange (I) vers une sortie (104), la première courroie (103) étant enroulée autour d'au moins un premier rouleau motorisé (105) et configurée pour être entraînée par ledit rouleau avec une vitesse d'avance (V₁) ;
- un moyen de pression (106), qui est pourvu d'une partie de moule inférieure (107) et d'une partie de moule supérieure (108) entre lesquelles est placé un socle pour former une palette (1) et qui sont alternativement mobiles entre une configuration de chargement espacée et une configuration de pressage plus rapprochée,
- une deuxième courroie transporteuse (109) intercalée entre ledit moyen de stockage (101) et ledit moyen de pression (106), qui est enroulée autour d'au moins un deuxième rouleau motorisé (110) configuré pour l'entraîner avec une vitesse d'avance (V₂) et est associée à un moyen de translation pour l'actionnement avec un mouvement de translation alternatif dans une direction substantiellement horizontale avec une vitesse de translation (V₃), la partie supérieure (111) de la deuxième courroie (109) étant substantiellement horizontale et configurée pour translater avec une vitesse de transfert (V₄) obtenue à partir de la combinaison de la vitesse d'avance (V₂) et de la vitesse de translation (V₃),
pendant le chargement, la deuxième courroie (109) étant placée sous la sortie (104) afin d'obtenir la pose sur la partie supérieure (111) d'un matelas (M) dudit mélange (I) et pendant le déchargement, la deuxième courroie (109) étant intercalée entre lesdites parties de moule (107, 108) dans une configuration espacée pour le transfert du matelas (M) dans la partie de moule inférieure (107),
un moyen pour moduler au moins un paramètre parmi ladite vitesse d'avance (V₁), ladite vitesse d'avance (V₂) et ladite vitesse de translation (V₃) afin d'obtenir un ajustement de la quantité de mélange (I) chargée/déchargée sur/de la partie supérieure (111) de ladite deuxième courroie (109) le long de l'étendue dudit matelas (M).

2. Appareil (100) selon la revendication 1, **caractérisé en ce que** ledit moyen de translation, ledit premier rouleau motorisé (105) et ledit deuxième rouleau motorisé (110) comprennent des moteurs électriques respectifs et **en ce que** ledit moyen de modulation comprend un moyen électronique pour le réglage et la commande desdits moteurs électriques.

3. Appareil (100) selon la revendication 1 ou 2, **caractérisé en ce que** ledit moyen de modulation est adapté pour réduire ladite vitesse de transfert (V₄) et/ou augmenter ladite vitesse d'avance (V₁) pendant le chargement afin d'obtenir un matelas (M) dudit mélange (I) ayant des sections transversales plus épaisses qui correspondent aux parties de la palette (1) qui ont une plus grande densité et afin de maintenir ladite vitesse de transfert (V₄) substantiellement constante pendant le déchargement de ladite courroie.

4. Appareil (100) selon la revendication 1 ou 2, **caractérisé en ce que** ledit moyen de modulation est adapté pour maintenir ladite vitesse d'avance (V₁) et ladite vitesse de transfert (V₄) substantiellement constantes pendant le chargement de ladite deuxième courroie (109), afin d'obtenir un matelas (M) dudit mélange (I) qui a une épaisseur substantiellement constante et afin d'augmenter ladite vitesse d'avance (V₂) et/ou diminuer ladite vitesse de translation (V₃) pendant le déchargement de ladite deuxième courroie pour décharger de plus grandes quantités de mélange (I) au niveau des sections (114) de ladite partie de moule inférieure (107) qui correspondent aux parties de la palette (1) qui ont une plus grande densité.
